## Europäisches Patentamt
## European Patent Office
## Office européen des brevets

(19)

(11) Veröffentlichungsnummer: **0 056 445**
**B1**

(12)

# EUROPÄISCHE PATENTSCHRIFT

(45) Veröffentlichungstag der Patentschrift:
02.05.85

(51) Int. Cl.⁴: **F 24 D 19/10**

(21) Anmeldenummer: **81109047.1**

(22) Anmeldetag: **27.10.81**

(54) **Verfahren zum Betrieb einer Heizungsanlage und Anordnung zur Durchführung des Verfahrens.**

(30) Priorität: **20.01.81 DE 3101637**

(43) Veröffentlichungstag der Anmeldung:
**28.07.82 Patentblatt 82/30**

(45) Bekanntmachung des Hinweises auf die Patenterteilung:
**02.05.85 Patentblatt 85/18**

(84) Benannte Vertragsstaaten:
**AT BE CH DE FR GB IT LI LU NL SE**

(56) Entgegenhaltungen:
**EP - A - 0 042 958**
**DE - A - 2 637 209**
**DE - A - 2 919 751**
**DE - A - 2 927 408**
**FR - A - 2 291 455**
**FR - A - 2 451 548**

(73) Patentinhaber: **Siemens Aktiengesellschaft, Berlin und München Wittelsbacherplatz 2, D-8000 München 2 (DE)**

(72) Erfinder: **Bechtold, Rainer, Speckweg 51, D-8521 Möhrendorf (DE)**
Erfinder: **Gärtner, Franz-Georg, Dr., Johann-Krieger-Strasse 27, D-8500 Nürnberg (DE)**
Erfinder: **Kutschera, Karlheinz, Dr., Alter Garten 10, D-8521 Bräuningshof (DE)**

ACTORUM AG

## Beschreibung

Aus der EP-A-42 958, die gemäss Art. 54 (3) EPU zum Stand der Technik gehört, ist eine Heizungsanlage bekannt, die einen mit flüssigen oder gasförmigen Brennstoffen beheizbaren Heizkessel und eine mit dem Heizkreis verbundene Wärmepumpe enthält. Die Wärmepumpe wird in eine zum Heizkessel führende Rücklaufleitung eingeschaltet und damit das Ausgangswasser der Wärmepumpe durch den Heizkessel geführt. Der Betrieb der Wärmepumpe wird in Abhängigkeit von der Grösse und dem zeitlichen Verhalten der Rücklauftemperatur bezüglich eines vorgebbaren Sollwertes gesteuert. Der Betrieb des Brenners des Heizkessels wird hinsichtlich seiner Zuschaltung in Abhängigkeit von einer Mindestdauer einer Unterschreitung der Soll-Rücklauftemperatur und hinsichtlich seiner Abschaltung in Abhängigkeit von einer vorgebbaren Brenndauer gesteuert. Zumindest bei betriebsbereiter Wärmepumpe ist jeder Zuschaltung des Brenners eine Wärmepumpen-Betriebsphase vorgebbarer Dauer vorgeschaltet. Das Abschalten der Wärmepumpe erfolgt entweder bei Erreichen einer vorgebbaren Temperatur oder bei Erreichen ihrer maximalen Arbeitstemperatur über einen Druckschalter oder bei für eine vorgebbare Zeit unterschrittener Rücklauf-Solltemperatur über ein Relais. Die Inbetriebnahme des Brenners des Heizkessels wird in Abhängigkeit von einer Mindestdauer der Unterschreitung der Soll-Rücklauftemperatur und der erfolgten Abschaltung der Wärmepumpe gesteuert. Die Zuschaltung der Wärmepumpe ist in Abhängigkeit von einem Aussentemperaturfühler sperrbar.

Aus der DE-A-29 19 751 ist ein Verfahren zum Betrieb einer Heizungsanlage bekannt, die von einem Wärmeträger durchströmte Heizkörper, eine Wärmepumpe, sowie eine in Abhängigkeit von der Temperatur des Wärmeträgers zuschaltbare Zusatzwärmequelle und eine Regeleinrichtung aufweist.

Ferner ist aus derselben DE-A-29 19 751 eine Anordnung zur Durchführung des Verfahrens bekannt, wobei die Regeleinrichtung einen Heizungsregler, eine Wärmepumpensteuerung, eine Steuerung für die Zusatzwärmequelle sowie einen Bivalenzumschalter aufweist, in Abhängigkeit von dessen Ausgangssignal die Zusatzwärmequelle ein- oder ausgeschaltet wird und wobei der Heizungsregler aus Temperaturmesswerten den Temperatursollwert des Wärmeträgers ermittelt und Stellsignale zur Sollwert-Istwertangleichung abgibt.

Mit fallender Aussentemperatur sinkt die Wärmeleistung einer Wärmepumpe, insbesondere bei Luft-Wasser-Wärmepumpen, bei denen als Wärmereservoir die Umgebungsluft genutzt wird. Die erforderliche Wärmeleistung des durch die Heizungsanlage zu erwärmenden Gebäudes steigt jedoch mit fallender Aussentemperatur an. Unterhalb einer kritischen Aussentemperatur kann daher die Wärmepumpe die erforderliche Wärmeleistung nicht mehr alleine aufbringen.

Aus diesem Grunde weisen solche Heizungsanlagen eine zuschaltbare Zusatzwärmequelle, zumeist in Form eines Heizkessels auf, der dann zur Unterstützung der Wärmepumpe im Parallelbetrieb, d.h. zusätzlich zur Wärmepumpe in Betrieb gesetzt wird. Aus der bereits genannten DE-A-29 19 751 ist eine Steuerung für eine derartige Heizungsanlage bekannt. Wenn dabei die von einem Temperaturfühler gemessene Umgebungstemperatur über einem vorgegebenen Mindestwert von beispielsweise 5°C liegt, so wird die Wärmepumpe in Betrieb genommen, während die Zusatzwärmequelle verriegelt ist. Ferner wird die Rücklauftemperatur der Heizungsanlage überwacht. Sinkt diese unter einen vorgegebenen Wert von beispielsweise 45°C, so wird die Zusatzwärmequelle eingeschaltet, so dass ein Parallelbetrieb beider Wärmeerzeuger vorliegt. Die Zusatzwärmequelle wird wieder ausgeschaltet, wenn die Rücklauftemperatur einen vorgegebenen Wert von 50°C überschreitet. Fällt die Aussentemperatur unter einen vorgegebenen Wert von beispielsweise 5°C ab, so wird die Wärmepumpe ausser Betrieb genommen und die gesamte Wärmeerzeugung erfolgt durch die Zusatzwärmequelle.

Dieses bekannte Verfahren ermöglicht keine optimale Ausnutzung der Wärmepumpe. Diese wird nämlich bei einer festen Umgebungstemperatur ausgeschaltet, obwohl sie unter Umständen durchaus noch in der Lage wäre, die erforderliche Wärmeleistung aufzubringen. Ausserdem wird bereits bei kurzzeitigem Absinken der Rücklauftemperatur die Zusatzwärmequelle in Betrieb genommen. Dies führt dazu, dass die Zusatzwärmequelle zu früh und zu häufig eingeschaltet wird, was zu einer Energievergeudung durch die Zusatzwärmequelle führt.

Der Erfindung liegt als erstes die Aufgabe zugrunde, ein Verfahren der eingangs genannten Art anzugeben, das eine verbesserte Ausnutzung der Wärmepumpe ermöglicht. Ferner liegt der Erfindung die Aufgabe zugrunde, eine Anordnung der eingangs genannten Art anzugeben, die eine Zuschaltung der Zusatzwärmequelle so steuert, dass die gewünschte, verbesserte Ausnutzung erreicht wird.

Die erste Aufgabe wird erfindungsgemäss dadurch gelöst, dass bei einem Verfahren zum Betrieb einer Heizungsanlage, die von einem Wärmeträger durchströmte Heizkörper, eine Wärmepumpe sowie eine in Abhängigkeit vom Temperaturistwert des Wärmeträgers zuschaltbare Zusatzwärmequelle und eine Regeleinrichtung aufweist, die Zuschaltung der Zusatzwärmequelle in Abhängigkeit vom Ergebnis einer Wärmeleistungsbilanz aus geforderter Wärmeleistung und max. Wärmeleistung der Wärmepumpe erst dann erfolgt, wenn bei laufender Wärmepumpe der Temperaturistwert des Wärmeträgers den unteren Grenzwert eines den zeitlich variablen Temperatursollwert des Wärmeträgers beinhaltenden Toleranzbandes unterschreitet und innerhalb einer Laufzeitspanne, deren Beginn mit dem Zeitpunkt der Unterschreitung des unteren Grenzwertes zusammenfällt, nicht wieder überschreitet und am Ende der Laufzeitspanne gegenüber dem Temperaturistwert zu Beginn der Laufzeitspanne nicht einen Mindesttemperaturanstieg aufweist. Durch dieses Verfahren ist sichergestellt, dass die Zusatzwärmequelle erst dann in Betrieb gesetzt wird, wenn die Wärmepumpe die geforderte Wärmeleistung tatsächlich nicht mehr zu erbringen vermag, wobei als Kriterium für ein Wärmeleistungsdefizit das Temperaturkriterium in Form des zeitlichen Verlaufs des Temperaturistwertes des Wärmeträgers in Relation zum Temperatursollwert dient. Eine Unterschreitung des unteren Grenzwertes, die zeitlich kürzer ist als die Laufzeitspanne, führt hierbei nicht zur Inbetriebnahme der Zusatzwärmequelle. Der Temperatursollwert des Wärmeträgers und damit die Lage des Toleranzbandes ist zeitlich variabel, da er durch die Regeleinrichtung, beispielsweise in Abhängigkeit von der Aussentemperatur oder der Zimmertemperatur, ständig neu ermittelt wird und da bei der Umschaltung von Nachtabsenkung auf Tagbetrieb eine sprunghafte Änderung des Temperatursollwertes auftritt. Tritt innerhalb der Laufzeitspanne eine gegebenenfalls sprunghafte Erhöhung des Temperatursollwertes des Wärmeträgers auf und hat der Temperaturistwert des Wärmeträgers am Ende der Laufzeitspanne den unteren Grenzwert des Toleranzbandes noch nicht wieder erreicht, tritt auch dann keine Inbetriebnahme der Zusatzwärmequelle auf, wenn der Temperaturistwert des Wärmeträgers am Ende der Laufzeitspanne gegenüber dem Temperaturistwert zu Beginn der Laufzeitspanne wenigstens den Mindesttemperaturanstieg aufweist. Damit wird das Prinzip der starren Bivalenztemperatur verlassen und durch eine gleitende, die individuellen Bedingungen des Gebäudes sowie die zeitlich variierenden Witterungsbedingungen berücksichtigende gleitende Bivalenztemperatur ersetzt. Untersuchungen zeigen, dass bei den meisten Heizungsanlagen die Wärmepumpe in der Lage waren, bis zu Temperaturen unter minus 5°C ohne Zuschaltung der Zusatzwärmequelle die geforderte Heizleistung aufzubringen. Konnte bei bisherigen konventionellen Heizungsanlagen durch den Betrieb der Wärmepumpe bei ölgespeisten Heizkesseln als Zusatzwärmequelle eine Öleinsparung von etwa 65% erreicht werden, so ist nunmehr eine Einsparung bis zu 85% des jährlichen Heizölbedarfs ermöglicht (Klimazone 1).

Die zweite Aufgabe wird erfindungsgemäss dadurch gelöst, dass bei einer Anordnung, bei der die Regeleinrichtung einen Heizungsregler, eine Wärmepumpensteuerung, eine Steuerung für die Zusatzwärmequelle sowie einen Bivalenzumschalter aufweist, in Abhängigkeit von deren Ausgangssignal die Zusatzwärmequelle ein- oder ausgeschaltet wird und wobei der Heizungsregler aus Temperaturmesswerten den Temperatursollwert des Wärmeträgers und Stellsignale der Sollwert-Istwertangleichung abgibt, die Regeleinrichtung ein Schwellwertglied aufweist, das ein erstes Signal abgibt, solange der Temperaturistwert des Wärmeträgers innerhalb der Bandbreite des um den Temperatursollwert liegenden Toleranzbandes liegt, und das ein zweites Signal abgibt, wenn der untere Grenzwert des Toleranzbandes unterschritten wird, wobei im Bivalenzumschalter das erste Signal des Schwellwertgliedes konjunktiv verknüpft mit einem den Betrieb der Wärmepumpe anzeigenden Signal einerseits den Start einer die Laufzeitspanne vorgebenden, zurückstellbaren Laufzeitstufe auslöst, die am Ende der Laufzeitspanne ein Endsignal abgibt, und andererseits über die erste Stellung eines steuerbaren Umschalters die Übernahme des momentanen Temperaturistwertes des Wärmeträgers in einen ersten Speicher bewirkt, wobei ferner das Endsignal einerseits zusammen in disjunktiver Verknüpfung mit dem zweiten Signal des Schwellwertgliedes zur Zurücksetzung der Laufzeitstufe dient und andererseits über die zweite Stellung des Umschalters die Übernahme des momentanen Temperaturwertes des Wärmeträgers in den Bivalenzumschalter, die Bildung eines Differenzwertes durch Subtraktion des im ersten Speicher befindlichen anfänglichen Temperaturistwertes vom momentanen Temperaturistwert und den Vergleich des Differenzwertes mit dem Mindesttemperaturanstieg in einem Diskriminator auslöst, dessen Ausgang aktiv ist, wenn der Differenzwert kleiner als der Mindesttemperaturanstieg ist und wobei zur Erzeugung eines, die Zuschaltung der Zusatzwärmequelle bewirkenden Signals, am Ausgang des Bivalenzumschalters eine konjunktive Verknüpfung des Endsignals mit dem Ausgangssignal des Diskriminators vorgesehen ist.

Eine derartige Anordnung kann mit geringem Kostenaufwand in funktionssicherer Weise aus bekannten Funktionselementen aufgebaut werden. Diese Anordnung kann jedoch auch so aufgebaut werden, dass die Regeleinrichtung durch einen Mikrocomputer realisiert ist. In diesem Fall sind sowohl die Funktionen des Heizungsreglers, der Wärmepumpensteuerung, der Steuerung für die Zusatzwärmequelle und des Bivalenzumschalters auf den Mikrocomputer übertragen. Dies ermöglicht einen ausserordentlich kompakten und kostengünstigen Aufbau.

Eine vorteilhafte Weiterbildung des erfindungsgemässen Verfahrens besteht darin, dass die Zusatzwärmequelle dann abgeschaltet wird, wenn die zum Ausgleich der Temperaturdifferenz zwischen Sollwert und Istwert des Wärmeträgers erforderliche Wärmeleistung von der Wärmepumpe allein erbracht werden kann. Auch hier wird also das Konzept der temperaturstarren Abschaltung der Zusatzwärmequelle verlassen und diese frühstmöglich stillgelegt. Auch dies trägt zur Energieeinsparung bei.

Eine weitere vorteilhafte Weiterbildung des Verfahrens bei einer Heizungsanlage mit einem von der Regeleinrichtung beeinflussten, als Vierwegeventil ausgebildeten und von einem Stellmotor angetriebenen Mischventil zur Kopplung der Heizkreise von Wärmepumpe und Zusatzwärmequelle besteht darin, dass die Zusatzwärmequelle dann abgeschaltet wird, wenn das Mischventil die Endlage erreicht, in der die Zusatzwärmequelle keinen Beitrag zur Erwärmung des Wärmeträgers mehr leistet. Wenn sowohl die Wärmepumpe als auch die Zusatzwärmequelle, also vorzugsweise ein Ölheizkessel, in Betrieb sind, wird über das Mischventil dem Heizkreislauf zwischen Wärmepumpe und Heizkörper stellungsabhängig eine grössere oder kleinere Menge des in der Zusatzwärmequelle erhitzten Wärmeträgers beigemischt. Die Steuerung des Mischventils erfolgt durch den Heizungsregler. Wird durch den Heizungsregler das Mischventil in seine eine Endlage gebracht, in der der Zufluss des in der Zusatzwärmequelle erhitzten Wärmeträgers in den die Wärmepumpe beinhaltenden Heizkreis blockiert ist, dann ist dies ein Anzeichen dafür, dass die Wärmepumpe allein die geforderte Wärmeleistung aufzubringen vermag. Dies wird zur Abschaltung der Zusatzwärmequelle benutzt.

Hierbei ist es vorteilhaft, wenn ein Endlagenschalter am Mischventil vorgesehen ist, dessen Signal am Ausgang des Bivalenzumschalters ein die Abschaltung der Zusatzwärmequelle bewirkendes Signal auslöst.

Die Zusatzwärmequelle kann ein Heizkessel sein.

Die Erfindung wird im folgenden anhand eines Ausführungsbeispiels in den Fig. 1 bis 3 näher erläutert. Dabei zeigt:

Fig. 1 eine Prinzipdarstellung der Heizungsanlage,

Fig. 2 ein Blockschaltbild des Bivalenzumschalters und seine Kopplung mit dem Heizungsregler und

Fig. 3 ein Signaldiagramm zur Veranschaulichung der Arbeitsweise des Schwellenwertgliedes in der Regeleinrichtung.

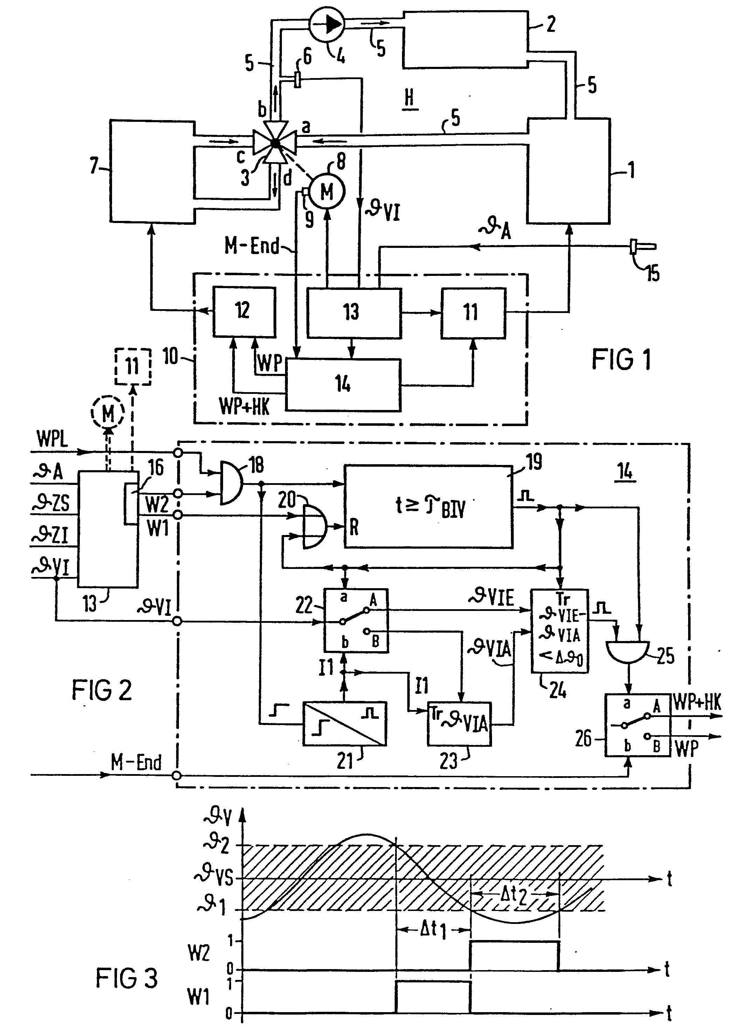

In Fig. 1 ist mit dem Bezugszeichen 1 die Wärmepumpe bezeichnet, die als Luft-Wasser-Wärmepumpe ausgeführt ist. Eine starke Abhängigkeit der Wärmeleistung der Wärmepumpe von der Aussentemperatur tritt nur bei solchen Luft-Wasser-Wärmepumpen auf, wohingegen die Wärmeleistung von Wärmepumpen, die dem Grundwasser Energie entziehen, jahreszeitlich geringe Schwankungen der Wärmeleistung aufweisen. Die Heizkörper, von denen nur einer dargestellt ist, führen das Bezugszeichen 2. In der im Heizungsrücklauf angeordneten Wärmepumpe 1 wird das als Wärmeträger dienende Wasser erwärmt und über das als Vierwegeventil ausgebildete Mischventil 3 und die Umwälzpumpe 4 in den Heizkörper 2 zurückgeführt. Wärmepumpe 1, Heizkörper 2, Mischventil 3, Umwälzpumpe 4 und die verbindenden Rohrleitungen 5 bilden den Heizkreis H. Als Temperaturistwert $\vartheta_{VJ}$ dient die Temperatur des Heizungsvorlaufs, die durch den Vorlauftemperaturfühler 6 erfasst wird.

Als zuschaltbare Zusatzwärmequelle dient ein Heizkessel 7, der vorzugsweise durch einen fossilen Energieträger beheizt wird. Der Heizkessel 7 beinhaltet eine interne Regelung, die dafür sorgt, dass eine vorgebbare Temperatur des im Heizkessel befindlichen Wärmeträgers aufrechterhalten wird. Der im Heizkessel 7 aufgeheizte Wärmeträger strömt dem Anschluss c des Mischventils 3 zu, wohingegen aus dem Anschluss d des Mischventils 3 je nach Stellung des Mischventils ein mehr oder weniger grosser Anteil des von der Wärmepumpe 1 in den Anschluss a einströmenden Wärmeträgers abgezweigt wird. Der Anschluss b des Mischventils 3 liefert den Heizungsvorlauf.

Das durch den Stellmotor 8 betätigbare Mischventil 3 weist einen Endlagenschalter 9 auf. Dieser Endlagenschalter 9 ist so angeordnet, dass er ein elektrisches Signal dann abgibt, wenn im Mischventil 3 je für sich die beiden Anschlüsse a und b, beziehungsweise die Anschlüsse c und d miteinander verbunden sind. In diesem Fall ist der Heizkessel 7 aus dem Heizkreis H ausgekoppelt. Der im Heizkessel 7 befindliche Wärmeträger ist dann über den Anschluss c des Mischventils 3 ohne Abzweigung direkt mit dem Anschluss d verbunden.

Verlässt das Mischventil 3 die beschriebene Endlage, so wird ein Teil des über den Anschluss a zuströmenden, durch die Wärmepumpe 1 erwärmten Wärmeträgers über den Anschluss d zum Heizkessel 7 abgezweigt, wohingegen der restliche Anteil des über den Anschluss a zuströmenden Wärmeträgers direkt über den Anschluss b abströmt. Über den Anschluss c strömt ein Anteil des im Heizkessel 7 erhitzten Wärmeträgers ebenfalls in den Anschluss b. Diesen letzteren Fall, bei dem die Wärmepumpe 1 und der Heizkessel 7 arbeiten und gemeinsam die geforderte Wärmeleistung erbringen, nennt man Parallelbetrieb. Er erfolgt nur dann, wenn die geforderte Wärmeleistung nicht nur kurzfristig nicht allein von der Wärmepumpe mehr aufgebracht werden kann.

Zum Betrieb der Heizungsanlage ist eine Regeleinrichtung 10 vorgesehen, die als Funktionsblöcke eine Wärmepumpensteuerung 11, eine Steuerung 12 für die Zusatzwärmequelle 7, einen Heizungsregler 13 sowie einen Bivalenzumschalter 14 aufweist.

Bei einem verhältnismässig niedrigen Heizleistungsbedarf ist der Heizkessel 7 ausser Betrieb und die Wärmepumpe 1 kann – gesteuert durch die Wärmepumpensteuerung 11 im Zusammenwirken mit dem Heizungsregler 13 – im intermittierenden Betrieb bereits die erforderliche Wärmeleistung erbringen. Mit zunehmendem Heizleistungsbedarf werden die Abschaltpausen der Wärmepumpe 1 immer kürzer, bis sie schliesslich permanent laufen muss, um der Wärmeanforderung zu genügen. Eine weitere Steigerung der durch die Wärmepumpe 1 abgegebenen Wärmeleistung ist nun nicht mehr erreichbar. Steigt die erforderliche Wärmeleistung beispielsweise durch einen Aussentemperaturrückgang weiter, so wird dies im Bivalenzumschalter 14 erkannt, worauf an dessen Ausgang ein Signal WP + HK erscheint, wodurch über die Steuerung für die Zusatzwärmequelle 12 die Inbetriebnahme des Heizkessels 7 veranlasst wird. Unter der Wirkung des Heizungsreglers 13, der beispielsweise unter Auswertung einer Heizkurve die Information des Aussentemperaturfühlers 15 in einen Temperatursollwert für den Wärmeträger umsetzt und mit dem vom Vorlauftemperaturfühler 6 gelieferten Temperaturistwert des Wärmeträgers vergleicht, erfolgt nun eine Betätigung des Mischventils 3 durch den Stellmotor 8, wodurch dem durch die Wärmepumpe 1 bereits erwärmten Wärmeträger im Mischventil 3 zusätzlich heisses Kesselwasser zugemischt wird. Damit kann die Temperatur-Sollwert-Istwert-Differenz $\vartheta_{VS}-\vartheta_{VJ}$ des Heizungsvorlaufs ausgeregelt werden. Nimmt die geforderte Wärmeleistung wiederum ab, wird unter dem Einfluss des Heizungsreglers 13 schliesslich der Stellmotor 8 das Mischventil 3 in eine Endlage bringen, in der der Heizkessel 7 aus dem Heizkreis H ausgekoppelt ist. Hierbei wird der Endschalter 9 betätigt, worauf das Signal M-End entsteht, das am Ausgang des Bivalenzreglers 14 das Signal WP erzeugt, wodurch über die Steuerung für die Zusatzwärmequelle 12 die Abschaltung des Heizkessels veranlasst wird.

Um ein zu rasches Pendeln zwischen dem Einschaltzustand und dem Ausschaltzustand der Zusatzwärmequelle 7 zu vermeiden, kann hierfür eine Minimallaufzeit von z.B. einer Stunde vorgesehen werden.

Das Kriterium zur Zuschaltung der Zusatzwärmequelle und der darauf basierende Bivalenzumschalter 14 sollen im folgenden anhand der Fig. 2 und 3 erläutert werden.

Der Heizungsregler 13 regelt – wie bereits bislang üblich – den Temperaturistwert $\vartheta_{VI}$ des Wärmeträgers auf einen entsprechenden Temperaturistwert $\vartheta_{VS}$. Im Ausführungsbeispiel ist als Temperaturistwert $\vartheta_{VI}$ die Vorlauftemperatur des Wärmeträgers, die von dem Vorlauftemperaturfühler 6 erfasst wird, ausgewählt. In gleicher Weise kann jedoch auch die Rücklauftemperatur ausgewertet und geregelt werden. Der Temperaturistwert des Wärmeträgers ist – wie ersichtlich – mit $\vartheta_{VI}$, der Temperatursollwert mit $\vartheta_{VS}$ bezeichnet. Der Temperatursollwert $\vartheta_{VS}$ kann – wie bereits erläutert – aus der Aussentemperatur $\vartheta_A$ oder der Temperatursollwert-Istwertabweichung $\vartheta_{ZS}-\vartheta_{ZI}$ eines temperaturbestimmenden Zimmers oder aus einer Kombination beider Werte gewonnen werden.

Der Heizungsregler 13 enthält jedoch abweichend von den bisher üblichen Geräten ein Schwellenwertglied 16, das ein erstes Signal W1 und ein zweites Signal W2 als Ergebnis eines Vergleichs des Temperaturistwertes $\vartheta_{VI}$ mit einem um den Temperatursollwert $\vartheta_{VS}$ gelegten Toleranzband T abgibt. Dies ist in Fig. 3 veranschaulicht. Während der betrachteten Zeit t sei der Temperatursollwert $\vartheta_{VS}$ konstant. Das um den Temperatursollwert $\vartheta_{VS}$ gelegte Toleranzband T weist einen oberen Grenzwert $\vartheta_2$ und einen unteren Grenzwert $\vartheta_1$ auf. In dem Zeitintervall $\Delta t1$, in dem der Temperaturistwert $\vartheta_{VI}$ zwischen dem oberen Grenzwert $\vartheta_2$ und dem unteren Grenzwert $\vartheta_1$ des Toleranzbandes T liegt, liefert das Schwellenwertglied 16 als erstes Signal das Rechtecksignal W1, in dem Zeitintervall $\Delta t2$, in dem der Temperaturistwert $\vartheta_{VI}$ unterhalb der Untergrenze $\vartheta_1$ des Toleranzbandes liegt, jedoch als zweites Signal das Rechtecksignal W2. Das erste Signal W1 entspricht damit der Aussage «genug Wärme», das zweite Signal dagegen der Anforderung «mehr Wärme».

Der Bivalenzumschalter 14 ist in Fig. 2 gestrichelt umrandet. Er erhält eingangsseitig die im Vorangehenden definierten Signale $\vartheta_{VI}$, W1 und W2 sowie das zusätzliche Signal WPL als Indikator dafür, dass die Wärmepumpe läuft. Die Signale WPL und W2 werden über ein UND-Gatter 18 konjunktiv verknüpft. Das Ausgangssignal des UND-Gatters startet eine Laufzeitstufe 19, die nach einer Laufzeitspanne $\tau_{BIV}$ ein impulsförmiges Endsignal liefert. Die Laufzeitstufe 19 kann jedoch an der Abgabe des impulsförmigen Endsignals gehindert werden, wenn ihr Rückstelleingang R vor Ablauf der Laufzeitspanne $\tau_{BIV}$ mit einem Rücksetzsignal beaufschlagt wird. Dem Rückstelleingang R ist hierfür ein ODER-Gatter 20 vorgeschaltet, dessen Eingängen einerseits das Endsignal der Laufzeitstufe 19, andererseits das Signal W1 des Schwellenwertgliedes 16 zur konjunktiven Verknüpfung zugeführt sind.

Der Ausgang des UND-Gatters 18 ist ferner mit dem Eingang eines Differenziergliedes 21 zur Erzeugung eines Trigger-Impulses I1 verbunden. Dieser Trigger-Impuls I1 bewirkt am Steuereingang b des ersten steuerbaren Umschalters 22, dass dieser den Kontakt B schliesst. In dieser Kontaktstellung steht der momentane Temperatur-Istwert $\vartheta_{VIA}$ am Eingang eines triggerbaren Speichers 23 an, an dessen Trigger-Eingang Tr gleichzeitig der Trigger-Impuls I1 des Differenziergliedes 21 geführt ist. Damit wird mit dem Start der Laufzeitstufe 19 der zu diesem Zeitpunkt aktuelle Wert des Temperaturistwertes $\vartheta_{VIA}$ in den triggerbaren Speicher 23 übernommen. Geht nun während der Laufzeitspanne $\tau_{BIV}$ kein Signal W1 ein, das anzeigen würde, dass es der Wärmepumpe wieder allein möglich war, den Temperaturistwert $\vartheta_{VI}$ wieder in das Gebiet des Toleranzbandes T um den Temperatursollwert $\vartheta_{VS}$ zurückzuführen, dann erscheint am Ausgang der Laufzeitstufe 19 das den Ablauf der Laufzeitspanne $\tau_{BIV}$ signalisierende Endsignal.

Dieses Endsignal steht am Steuereingang a des ersten steuerbaren Umschalters 22 an, worauf der Kontakt A geschlossen wird. In dieser Kontaktstellung wird der nunmehr aktuelle Temperaturistwert $\vartheta_{VIE}$ an den einen Eingang eines Diskriminators 24 gelegt, der triggerbar ausgelegt sein kann. Dies ist jedoch nicht zwingend erforderlich. Am zweiten Eingang des Diskriminators 24 steht der Wert $\vartheta_{VIA}$ des im triggerbaren Speicher 23 enthaltenen Temperaturistwertes zu Beginn der Laufzeitspanne $\tau_{BIV}$. An den Triggereingang Tr des Diskriminators 24 ist der Ausgang der Laufzeitstufe 19 angeschlossen. Mit Eingang des das Ende der Laufzeitspanne $\tau_{BIV}$ signalisierenden Endsignals werden die beiden Tempera-

turistwerte $\vartheta_{VIA}$ und $\vartheta_{VIE}$, die zu zwei um die Laufzeitspanne $\tau_{BIV}$ unterschiedlichen Zeitpunkten gewonnen sind, in dem Diskriminator 24 unter Bildung der Differenz $\vartheta_{VIE}-\vartheta_{VIA}$ und Vergleich dieser Differenz mit dem Wert des Mindesttemperaturanstieges $\Delta\vartheta_O$ ausgewertet. Der Diskriminator 24 enthält also die Funktion eines Differenzbildners für die Signale $\vartheta_{VIE}$ und $\vartheta_{VIA}$, eines Speichers für den Mindesttemperaturanstieg $\Delta\vartheta_O$ und eines Komparators für die Komparatoreingangsgrössen $\vartheta_{IVE}-\vartheta_{IVA}$ und $\Delta\vartheta_O$. Der Ausgang des Diskriminators 24 ist dann aktiv, wenn die Differenz $\vartheta_{VIE}-\vartheta_{VIA}$ kleiner als der Wert des Mindesttemperaturanstieges $\Delta\vartheta_O$ ist. Das Ausgangssignal des Diskriminators 24 sowie das Endsignal der Laufzeitstufe 19 werden in dem UND-Gatter 25 konjunktiv verknüpft. Das UND-Gatter 25 kann entfallen, wenn der Diskriminator 24 triggerbar ist und vom Endsignal getriggert wird. Das Ausgangssignal des UND-Gatters 25 steht am einen Steuereingang a eines steuerbaren Umschalters 26 an. Dem anderen Steuereingang b des steuerbaren Umschalters 26 ist das Signal M-End des Endlagenschalters 9 am Mischventil 3 zugeführt. Ist der Eingang a des zweiten steuerbaren Umschalters aktiv, wird der Kontakt A geschlossen und es entsteht am Ausgang des Bivalenzumschalters 14 das Signal WP + HK, das die Inbetriebnahme der Zusatzwärmequelle auslöst. Ist dagegen der zweite Eingang b des zweiten steuerbaren Umschalters mit einem Signal beaufschlagt, wird der Kontakt B geschlossen, so dass am Ausgang des Bivalenzumschalters 14 das Signal WP auftritt, das die Stillegung der eingeschalteten Zusatzwärmequelle bewirkt.

Durch den Bivalenzumschalter 14 erfolgt also die Zuschaltung der Zusatzwärmequelle 7 nur dann, wenn das zweite Signal W2 («mehr Wärme») des Schwellenwertgliedes 16 über die gesamte Laufzeitspanne $\tau_{BIV}$ aktiv ist und nicht zwischenzeitlich durch das erste Signal W1 («genug Wärme») abgelöst wird und wenn darüber hinaus zusätzlich der bei Beginn der Laufzeitspanne $\tau_{BIV}$ vorhandene Temperaturistwert $\vartheta_{VIA}$ bis zum Ende der Laufzeitspanne $\tau_{BIV}$ nicht um mindestens den Mindesttemperaturanstieg $\Delta\vartheta_O$ angestiegen ist. Gängige Werte für die Laufzeitspanne $\tau_{BIV}$ und den Mindesttemperaturanstieg $\Delta\vartheta_O$ sind 30 Minuten und 2°C. Steht bei laufender Wärmepumpe das zweite Signal des Schwellenwertgliedes 16 mindestens für die Laufzeitspanne $\tau_{BIV}$ an, weil während der Laufzeitspanne der Temperatursollwert $\vartheta_{VS}$ sprunghaft erhöht wurde, ist jedoch der zu Beginn der Laufzeitspanne $\tau_{BIV}$ vorhandene Temperaturistwert $\vartheta_{VIA}$ am Ende der Laufzeitspanne $\tau_{BIV}$ um mehr als den Mindesttemperaturanstieg $\Delta\vartheta_O$ unter der Wirkung der Wärmepumpe 1 angestiegen, unterbleibt die Inbetriebnahme der Zusatzwärmequelle, da in diesem Fall gute Aussichten bestehen, dass die Wärmepumpe 1 allein den Temperaturistwert $\vartheta_{VI}$ zwischen die Grenzen des Toleranzbandes T zurückzuführen vermag.

Der Bivalenzumschalter 14 kann aus handelsüblichen elektronischen Funktionsgruppen aufgebaut werden. Seine Funktionen können jedoch auch, insbesondere wenn bereits zumindest für Teile der Regeleinrichtung ein Mikrocomputer eingesetzt ist, durch diesen Mikrocomputer übernommen werden.

**Patentansprüche**

1. Verfahren zum Betrieb einer Heizungsanlage, die von einem Wärmeträger durchströmte Heizkörper (2), eine Wärmepumpe (1) sowie eine in Abhängigkeit von Temperaturistwert des Wärmeträgers zuschaltbare Zusatzwärmequelle (7) und eine Regeleinrichtung (10) aufweist, wobei die Zuschaltung der Zusatzwärmequelle (7) in Abhängigkeit vom Ergebnis einer Wärmeleistungsbilanz aus geforderter Wärmeleistung und maximaler Wärmeleistung der Wärmepumpe (1) erst dann erfolgt, wenn bei laufender Wärmepumpe (1) der Temperaturistwert ($\vartheta_{VI}$) des Wärmeträgers den unteren Grenzwert ($\vartheta_1$) eines den zeitlich variablen Temperatursollwert ($\vartheta_{VS}$) des Wärmeträgers beinhaltenden Toleranzbandes (T) unterschreitet und innerhalb einer Laufzeitspanne ($\tau_{BIV}$), deren Beginn mit dem Zeitpunkt der Unterschreitung des unteren Grenzwertes ($\vartheta_1$) zusammenfällt, nicht wieder überschreitet und am Ende der Laufzeitspanne ($\tau_{BIV}$) gegenüber dem Temperaturistwert ($\vartheta_{VIA}$) zu Beginn der Laufzeitspanne ($\tau_{BIV}$) nicht einen Mindesttemperaturanstieg ($\Delta\vartheta_O$) aufweist.

2. Verfahren nach Anspruch 1, wobei die Zusatzwärmequelle (7) dann abgeschaltet wird, wenn die zum Ausgleich der Temperaturdifferenz ($\vartheta_{VS}-\vartheta_{VI}$) zwischen Sollwert ($\vartheta_{VS}$) und Istwert ($\vartheta_{VI}$) des Wärmeträgers erforderliche Wärmeleistung von der Wärmepumpe (1) erbracht werden kann.

3. Verfahren nach Anspruch 2 bei einer Heizungsanlage mit einem von der Regeleinrichtung (10) beeinflussten, als Vierwegeventil ausgebildeten und von einem Stellmotor (8) angetriebenen Mischventil (3) zur Kopplung der Heizkreise von Wärmepumpe (1) und Zusatzwärmequelle (7), wobei die Zusatzwärmequelle (7) dann abgeschaltet wird, wenn das Mischventil (3) die Endlage erreicht, in der die Zusatzwärmequelle (7) keinen Beitrag zur Erwärmung des Wärmeträgers mehr leistet.

4. Anordnung zur Durchführung des Verfahrens nach einem der Ansprüche 1 bis 3, wobei die Regeleinrichtung (10) einen Heizungsregler (13), eine Wärmepumpensteuerung (11), eine Steuerung (12) für die Zusatzwärmequelle (7) sowie einen Bivalenzumschalter (14) aufweist, in Abhängigkeit von dessen Ausgangssignal (WP+HK; WP) die Zusatzwärmequelle (7) ein- oder ausgeschaltet wird, wobei der Heizungsregler (10) aus Temperaturmesswerten ($\vartheta_A$) den Temperatursollwert ($\vartheta_{VS}$) des Wärmeträgers ermittelt und Stellsignale zur Sollwert-Istwertangleichung abgibt, wobei die Regeleinrichtung (10) ein Schwellwertglied (16) aufweist, das ein erstes Signal (W1) abgibt, solange der Temperaturistwert ($\vartheta_{VI}$) des Wärmeträgers innerhalb der Bandbreite ($\vartheta_2-\vartheta_1$) des um den Temperatursollwert ($\vartheta_{VS}$) liegenden

Toleranzbandes (T) liegt, und das ein zweites Signal (W2) abgibt, wenn der untere Grenzwert ($\vartheta_1$) des Toleranzbandes (T) unterschritten wird, wobei im Bivalenzumschalter (14) das erste Signal (W1) des Schwellwertgliedes (16) konjunktiv (18) verknüpft mit einem den Betrieb der Wärmepumpe (1) anzeigenden Signal (WPL) einerseits den Start einer die Laufzeitspanne ($\tau_{BIV}$) vorgebenden, zurückstellbaren Laufzeitstufe (19) auslöst, die am Ende der Laufzeitspanne ($\tau_{BIV}$) ein Endsignal abgibt, und andererseits über die erste Stellung (B) eines steuerbaren Umschalters (22) die Übernahme des momentanen Temperaturistwertes ($\vartheta_{VIA}$) des Wärmeträgers in einen ersten Speicher (23) bewirkt, wobei ferner das Endsignal einerseits zusammen in disjunktiver Verknüpfung (20) mit dem zweiten Signal (W2) des Schwellwertgliedes (16) zur Zurücksetzung der Laufzeitstufe (19) dient und andererseits über die zweite Stellung (A) des Umschalters (22) die Übernahme des momentanen Temperaturwertes ($\vartheta_{VIE}$) des Wärmeträgers in den Bivalenzumschalter (14), die Bildung eines Differenzwertes ($\vartheta_{VIE}-\vartheta_{VIA}$) durch Subtraktion des im ersten Speicher (23) befindlichen anfänglichen Temperaturistwertes ($\vartheta_{VIA}$) vom momentanen Temperaturistwert ($\vartheta_{VIE}$) und den Vergleich des Differenzwertes ($\vartheta_{VIE}-\vartheta_{VIA}$) mit dem Mindesttemperaturanstieg ($\Delta\vartheta_0$) in einem Diskriminator (24) auslöst, dessen Ausgang aktiv ist, wenn der Differenzwert ($\vartheta_{VIE}-\vartheta_{VIA}$) kleiner als der Mindesttemperaturanstieg ($\Delta\vartheta_0$) ist und wobei zur Erzeugung eines die Zuschaltung der Zusatzwärmequelle (7) bewirkenden Signals (WP+HK) am Ausgang des Bivalenzumschalters (14) eine konjunktive Verknüpfung (25) des Endsignals mit dem Ausgangssignal des Diskriminators (24) vorgesehen ist.

5. Anordnung nach Anspruch 4 zur Durchführung des Verfahrens nach Anspruch 3, wobei ein Endlagenschalter (9) am Mischventil (3) vorgesehen ist, dessen Signal (M-End) am Ausgang des Bivalenzumschalters (14) ein die Abschaltung der Zusatzwärmequelle (7) bewirkendes Signal (WP) auslöst.

6. Anordnung nach Anspruch 4 oder 5, wobei als Zusatzwärmequelle (7) ein Heizkessel dient.

7. Anordnung nach Anspruch 4 oder 5, wobei die Regeleinrichtung (1) durch einen Mikrocomputer realisiert ist.

**Claims**

1. A method for the operation of a heating system possessing radiators (2), through which a heat carrying medium flows, a heat pump (1), an additional heat source (7) which is connected in dependence upon the actual temperature value of the heat carrying medium, and a regulating device (10), wherein the connection of the additional heat source (7) in dependence upon the result of a heat output balance of required heat output and the maximal heat output of the heat pump (1) is only effected if, for a running heat pump (1) the actual temperature value ($\vartheta_{VI}$) of the heat carrying medium falls below the lower limit value ($\vartheta_1$) of a tolerance band (T) which contains the time-variable theoretical temperature value ($\vartheta_{VS}$) of the heat carrying medium, and does not rise above it again within a transit time interval ($\tau_{BIV}$), whose start coincides with the time of the undershooting of the lower limit value ($\vartheta_1$), and does not have a minimum temperature rise ($\Delta\vartheta_0$) at the end of the transit time interval ($\tau_{BIV}$) relative to the actual temperature value ($\vartheta_{VIA}$) at the start of the transit time interval ($\tau_{BIV}$).

2. A method as claimed in Claim 1, wherein the additional heat source (7) is disconnected when the heat output required to balance the temperature difference ($\vartheta_{VS}-\vartheta_{VI}$) between the theoretical value ($\vartheta_{VS}$) and the actual value ($\vartheta_{VI}$) of the heat carrying medium can be produced by the heat pump (1).

3. A method as claimed in Claim 2 in a heating system having a mixing valve (3) influenced by the control device (10), constructed as a four-way valve and driven by a servo-motor to couple the heating circuits of heat pump (1) and additional heat source (7), where the additional heat source (7) is disconnected when the mixing valve (3) has reached the end position in which the additional heat source (7) no longer contributes to heating of the heat carrying medium.

4. An arrangement for carrying out the method as claimed in one of Claims 1 to 3, wherein the regulating device (10) possesses a heating regulator (13), a heat pump control unit (11), a control unit (12) for the additional heat source (7) and a bivalence switch (14), the additional heat source (7) is connected or disconnected in dependence upon the output signal (WP+HK; WP) of the bivalence switch, wherein the heating regulator (10) determines the theoretical temperature value ($\vartheta_{VS}$) of the heat carrying medium from the measured temperature values ($\vartheta_A$) and transmits adjusting signals for the adaptation of theoretical value/actual value, wherein the regulating device (10) possesses a threshold value element (16) which transmits a first signal (W1) as long as the actual temperature value ($\vartheta_{VI}$) of the heat carrying medium lies within the band width ($\vartheta_2-\vartheta_1$) of the tolerance band (T) which lies around the theoretical temperature value ($\vartheta_{VS}$), and which threshold value element transmits a second signal (W2) when the lower limit value ($\vartheta_1$) of the tolerance band (T) is undershot, wherein the first signal (W1) of the threshold value element (16) is conjunctively (18) connected to a signal (WPL) indicating the operation of the heat pump (1) in the bivalence switch (14) and on the one hand triggers the start of a transit time stage (19), which determines the transit time interval ($\tau_{BIV}$) and is re-adjustable and which at the end of the transit time interval ($\tau_{BIV}$) transmits an end signal, and on the other hand effects the transmission of the instantaneous actual temperature value ($\vartheta_{VIA}$) of the heat carrying medium into a first store (23) by means of the first position (B) of a controllable change-over switch (22), wherein furthermore on the one hand a disjunctive connection (20) of the end signal with the second signal (W2) of the threshold value element (16) serves to re-set the transit time stage (19) and on the other hand, via the second position (A) of the change-over switch (22) triggers the transmission of the instantaneous temperature value ($\vartheta_{VIE}$) of the heat carrying medium into the bivalence change-over switch (14), and the formation of a difference value ($\vartheta_{VIE}-\vartheta_{VIA}$) by subtracting the initial actual temperature value ($\vartheta_{VIA}$) present in the store (23) from the instantaneous actual temperature value ($\vartheta_{VIE}$) and also the comparison of the difference value ($\vartheta_{VIE}-\vartheta_{VIA}$) with the minimum temperature rise ($\Delta\vartheta_0$) in a discriminator (24), whose output is active if the difference value ($\vartheta_{VIE}-\vartheta_{VIA}$) is smaller than the minimum temperature rise ($\Delta\vartheta_0$), and wherein in order to produce a signal (WP+HK) which effects the connection of the additional heat source (7), there is arranged at the output of the bivalence change-over switch (14) a conjunctive connection (25) of the end signal to the output signal of the discriminator (24).

5. An arrangement as claimed in Claim 4 for carrying out the method as claimed in Claim 3, wherein an end position switch (9) is arranged at the mixing valve (3), whose signal (M-End) triggers a signal (WP) at the output of the bivalence change-over switch (14) which effects disconnection of the additional heat source (7).

6. An arrangement as claimed in Claim 4 or 5, wherein a heating boiler serves as an additional heating source (7).

7. An arrangement as claimed in Claim 4 or 5, wherein the regulating device (1) is a microcomputer.

**Revendications**

1. Procédé d'exploitation d'une installation de chauffage, qui comporte un radiateur (2) parcouru par un fluide caloporteur, une pompe à chaleur (1) ainsi qu'une source de chaleur supplémentaire (7), pouvant être raccordée en fonction de la valeur réelle de la température du fluide caloporteur, et un dispositif de régulation (10), et selon lequel le branchement de la source de chaleur supplémentaire (7) s'effectue en fonction du résultat d'un bilan de puissance thermique obtenu à partir de la puissance thermique requise et de la puissance thermique maximale de la pompe à chaleur (1) uniquement lorsque, alors que la pompe à chaleur (1) fonctionne, la valeur réelle ($\vartheta_{VI}$) de la température du fluide caloporteur tombe au-dessous de la valeur limite inférieure ($\vartheta_1$), d'une bande (T) de tolérance entourant la valeur de consigne ($\vartheta_{VS}$) variable dans le temps de la température du fluide caloporteur et ne dépasse pas à nouveau ladite valeur limite inférieure pendant un intervalle de temps de fonctionnement ($\tau_{BIV}$), dont le début coïncide avec l'instant de la chute de la valeur réelle de la température au-dessous de la valeur limite inférieure ($\vartheta_1$), et ne présente pas à la fin de l'intervalle de temps de fonctionnement ($\tau_{BIV}$) un accroissement minimum de la température ($\vartheta_0$) par rapport à la valeur réelle ($\vartheta_{VIA}$) de la température au début dudit intervalle de temps.

2. Procédé selon la revendication 1, selon lequel la source de chaleur supplémentaire (7) est débranchée lorsque la puissance thermique, qui est nécessaire pour compenser la différence de température ($\vartheta_{VS}-\vartheta_{VI}$) entre la valeur de consigne ($\vartheta_{VS}$) et la valeur réelle ($\vartheta_{VI}$) du fluide caloporteur, est délivrée par la pompe à chaleur (1).

3. Procédé selon la revendication 2, dans le cas d'une installation de chauffage comportant une valve de mélange (3) influencée par le dispositif de régulation (10), réalisée sous la forme d'une valve à quatre voies et entraînée par un servomoteur (8) et qui sert au couplage des circuits de chauffage de la pompe à chaleur (1) et la source de chaleur supplémentaire (7), selon lequel cette source (7) est débranchée lorsque la valve de mélange (3) atteint la position finale dans laquelle la source de chaleur supplémentaire (7) ne contribue plus à chauffer le fluide caloporteur.

4. Dispositif pour la mise en œuvre du procédé suivant l'une des revendications 1 à 3, dans lequel le dispositif de régulation (10) comporte un régulateur de chauffage (13), un dispositif (11) de commande de la pompe à chaleur, un dispositif (12) de commande pour la source de chaleur supplémentaire (7) ainsi qu'un commutateur à effet bivalent (14) en fonction du signal de sortie (WP+HK; WP) duquel la source de chaleur supplémentaire (7) est branchée ou débranchée, et dans lequel le régulateur de chauffage (10) détermine la valeur de consigne ($\vartheta_{VS}$) de la température du fluide caloporteur à partir des valeurs de mesure ($\vartheta_A$) de la température et délivre des signaux de réglage au dispositif d'équilibrage valeur de consigne-valeur réelle, et dans lequel le dispositif de régulation (10) comporte un circuit à valeur de seuil (16) qui délivre un premier signal (W1) tant que la valeur réelle ($\vartheta_{VI}$) de la température du fluide caloporteur se situe à l'intérieur de la largeur de bande ($\vartheta_2-\vartheta_1$) de la bande de tolérance (A) située autour de la valeur de consigne ($\vartheta_{VS}$) de la température, et qui délivre un second signal (W2) lorsque la valeur limite inférieure ($\vartheta_1$) de la bande de tolérance (T) est franchie vers le bas, et dans lequel, dans le commutateur à effet bivalent (14), le premier signal (W1) du circuit à valeur de seuil (16), combiné logiquement selon la fonction ET (18) à un signal (WPL) indiquant le fonctionnement de la pompe à chaleur (1), d'une part déclenche le démarrage d'un étage (19) de comptage du temps de fonctionnement, qui peut être ramené à zéro et prédétermine l'intervalle de temps de fonctionnement ($\tau_{BIV}$), et délivre un signal de fin à la fin de l'intervalle de temps de fonctionnement ($\tau_{BIV}$), et d'autre part réalise, lorsqu'un commutateur (22) pouvant être commandé est dans sa première position (B), le transfert de la valeur réelle instantanée ($\vartheta_{VIA}$) de la température du fluide caloporteur dans une première mémoire (23), et dans lequel en outre, d'une part le signal de fin, associé selon la combinaison logique OU (20) au second signal (W2) du circuit à valeur de seuil (16), sert à ramener à son état initial l'étage (19) de comptage du temps de fonctionnement et d'autre part déclenche, lorsque le commutateur (22) est dans sa seconde position (A), le transfert de la valeur instantanée ($\vartheta_{VIA}$) de la température du fluide caloporteur dans le commutateur à effet bivalent (14) la formation d'une valeur de différence ($\vartheta_{VIE}-\vartheta_{VIA}$) par soustraction de la valeur réelle initiale ($\vartheta_{VIA}$) de la température, présente dans la première mémoire (23), de la valeur réelle instantanée ($\vartheta_{VIA}$) de la température, et la comparaison de la valeur de différence ($\vartheta_{VIE}-\vartheta_{VIA}$) à l'accroissement minimale ($\Delta\vartheta_0$) de la température dans un discriminateur (24), dont la sortie est active lorsque la valeur de différence ($\vartheta_{VIE}-\vartheta_{VIA}$) est inférieure à l'accroissement minimale ($\Delta\vartheta_0$) de la température, et dans lequel pour l'obtention d'un signal (WP+HK), provoquant le branchement de la source de chaleur supplémentaire (7) à la sortie du commutateur à effet bivalent (14) il est prévu une combinaison logique ET (25) du signal de fin et du signal de sortie du discriminateur (24).

5. Dispositif suivant la revendication 4, pour la mise en œuvre du procédé suivant la revendication 3, dans lequel il est prévu sur la valve de mélange (3) un commutateur de position finale (9) dont le signal (N-fin) présent à la sortie du commutateur à effet bivalent (14), déclenche un signal (WP) provoquant le débranchement de la source de chaleur supplémentaire (7).

6. Dispositif suivant la revendication 4 ou 5, dans lequel une chaudière sert de source de chaleur supplémentaire (7).

7. Dispositif suivant la revendication 4 ou 5, dans lequel le dispositif de régulation (1) est formé par un micro-ordinateur.

FIG 1

FIG 2

FIG 3